# EUROPEAN PATENT SPECIFICATION

(11) **EP 3 441 682 B1**
(45) Date of publication and mention of the grant of the patent: **07.09.2022**
(21) Application number: 17185091.0
(22) Date of filing: 07.08.2017
(51) Int. Cl.: F24D 19/00, F24D 19/10, F28F 9/26, G05D 16/06, G05D 16/00, F28D 21/00, F28F 27/02

(54) **RADIATOR ARRANGEMENT**
HEIZKÖRPERANORDNUNG
AGENCEMENT DE RADIATEUR

(43) Date of publication of application: 13.02.2019
(73) Proprietor: Danfoss A/S, 6430 Nordborg (DK)
(72) Inventor: HOLCK, Poul, 6430 Nordborg (DK)
(74) Representative: Keil & Schaafhausen Patentanwälte PartGmbB

(56) References cited:
- EP-A2- 2 784 403
- AT-B- 370 513
- DE-A1- 10 256 021
- DE-A1-102010 010 541
- DE-U1- 29 500 325
- GB-A- 2 166 540

## Description

The present invention relates to a radiator arrangement comprising a radiator having a flow connection connected to a flow channel and a return connection.

When such a radiator arrangement is used in a building, the flow connection is connected to a flow line and the return connection is connected to a return line. A valve is used to control the flow of heat carrying fluid, in many cases hot water, through the radiator.

In some cases a so called H-piece is connected between the flow connection and the return connection. It is possible to mount pressure regulating means in such a H-piece, wherein the pressure regulating means are used to keep constant a pressure drop over the radiator. However, the use of a H-piece increases the costs and cannot always be used due to space restrictions. A radiator arrangement having a H-piece is known, for example, from DE 102 56 021 A1. This document does not disclose that the pressure regulating means are arranged in the connecting channel, so that they are built in and hidden in the radiator.

The object underlying the invention is to have a simple construction of a radiator in which the pressure drop over the radiator can be controlled. This object is solved with a radiator arrangement as defined in claim 1. In such a radiator arrangement no external parts are necessary.

Nevertheless, pressure regulating means are used. However, these pressure regulating means are now hidden in the radiator itself.

The pressure regulating means comprise a pressure responsive element loaded by the return pressure in the connecting channel, wherein the pressure regulating means form a seal between the connecting channel and the flow connection. The pressure regulating means close the connecting channel. The pressure responsive element, for example a membrane, is subject to the pressure in the connecting channel. This pressure can influence a position of a valve element of the pressure regulating means. In an embodiment of the invention the pressure regulating means are arranged for being mounted through the flow connection. The flow connection is accessible from the outside. No further openings in the radiator are necessary.

In an embodiment of the invention the connecting channel is located in a bottom part of the radiator. The radiator has a prescribed orientation when mounted. At the bottom part there are the connections, i.e. the flow connection and the return connection. When the pressure regulating means are located in this position, the pressure drop over the radiator can be used for controlling the pressure regulating means.

In an embodiment of the invention the pressure regulating means are at least partly accommodated in flow guiding means, wherein the flow guiding means connect the flow connection to the flow channel. The flow guiding means form a kind of channel in which parts of the pressure regulating means are located, wherein the pressure regulating means form a gap to throttle the flow from the flow connection to the flow channel. The position of these parts relative to each other is controlled by the pressure in the connecting channel. In an embodiment of the invention the flow channel is formed by a flow tube and the flow guiding means are seated on an opening of the flow tube. The flow guiding means can simply be pushed onto the opening of the flow tube or into the opening of the flow tube. This facilitates mounting.

In an embodiment of the invention the guiding means are made of a flexible material. The material of the guiding means can to some extend be deformed to mount the pressure regulating means in the connecting channel on the one hand and to connect the flow guiding means to the flow tube on the other hand. This deformation is temporary only.

In an embodiment of the invention the guiding means comprise at least two pieces. This facilitates mounting further. The pieces can be inserted through the flow connection one after the other, wherein the flow regulating means can be mounted between mounting of two pieces.

In an embodiment of the invention the two pieces are connected by a snap connection. When a first piece is mounted, the second piece can easily be connected to the first piece by means of the snap connection, i.e. simply by pressing the second piece onto the first piece.

In an embodiment of the invention an opening of the flow guiding means in which the pressure regulating means are mounted is formed by the two pieces. In this case the first piece is mounted and shifted onto the opening of the flow tube. Thereafter, the flow regulating means are inserted and mounted in the connecting channel. Thereafter, the second piece of the flow guiding means is mounted and the mounting is completed.

In an embodiment of the invention the flow guiding means are in form of a corrugated tube. Such a corrugated tube has two characteristics which are useful in the present construction. It can change its length simply by compressing it in lengthwise direction and it can be bent, for example by 90°, without changing substantially the free flow section. The use of a corrugated tube as guiding means simplifies further mounting of the pressure regulating means.

Preferred embodiments of the invention will now be described in more detail with reference to the drawings, wherein:
- Fig. 1: shows a perspective view of a radiator arrangement,
- Fig. 2: shows a sectional view of the radiator arrangement of Fig. 1 in a middle plane,
- Fig. 3: shows a detail III of Fig. 2,
- Fig. 4: shows another embodiment of the detail shown in Fig. 3, and
- Fig. 5: shows a third embodiment.

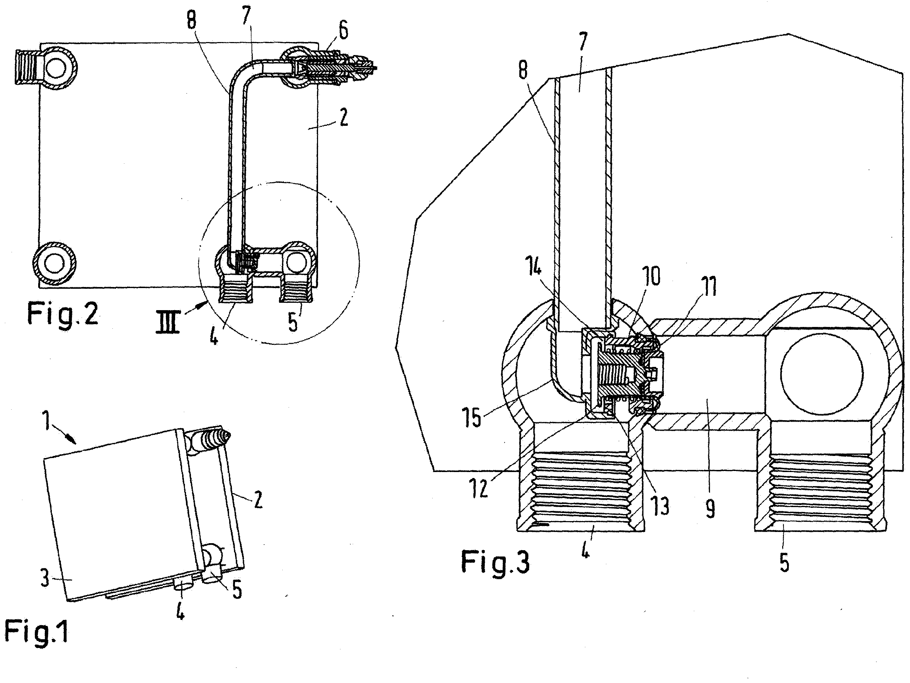

Fig. 1 schematically shows a radiator arrangement 1 in a perspective view. The radiator arrangement 1 comprises two plates 2, 3, a flow connection 4 and a return connection 5. As can be seen in Fig. 2, the flow connection 4 is connected to a flow control valve 6 by means of a flow channel 7. The flow channel 7 is formed by a flow tube 8. The flow tube 8 is arranged between the two plates 2, 3.

The flow connection 4 and the return connection 5 are connected by a connecting channel 9. Pressure regulating means 10 are arranged in the connecting channel 9 and form a seal between the connecting channel 9 and the flow connection 4. Pressure regulating means 10 of this kind are known, for example, from DE 102 56 021 A1. The pressure regulating means 10 comprise a pressure responsive element 11 in form of a membrane, a valve element 12 and a valve seat 13. The valve element is pretensioned by a spring 14 in a direction away from the valve seat 13. The position of the valve element 12 in relation to the valve seat 13 and therefore the throttling characteristics of the pressure regulating means 10 depend on a pressure difference between the flow connection 4 and the return connection 5. The valve element 12 will assume a position in which the force generated by this pressure difference and the force generated by the spring 14 are equal.

The flow connection 4, the return connection 5, the connecting channel 9 and the pressure regulating means 10 are located in a bottom part of the radiator. The distance between the flow connection 4 and the return connection 5 is usually prescribed by a standard and is in most cases 50 mm.

The pressure regulating means 10 are partly accommodated in flow guiding means 15. The flow guiding means form a connection between the flow connection 4 and the flow channel 7. The flow guiding means 15 are seated on an opening of the flow tube 8, i.e. they surround the opening of the flow tube 8. It is, however, also possible to insert the flow guiding means in a way not shown into the opening of the flow channel 7.

A part of the length of the pressure regulating means 10 is arranged outside the flow guiding means 15 so that water (or any other heat carrying fluid) can enter the pressure regulating means 10. The flow of the water is throttled in a gap between the valve element 12 and the valve seat 13 so that the pressure in the flow channel 7 is lower than the pressure at the flow connection 4. The pressure in the flow channel 7 is adjusted such that a pressure drop over the radiator is constant and substantially independent from the pressures at the flow connection 4 and the return connection 5.

The pressure regulating means 10 are mounted through the flow connection 4. Alternatively the pressure regulating means could be mounted through the flow connection 5 (if the pressure regulating means would be split into more components or a smaller construction).

To this end the pressure regulating means 10 are inserted through the flow connection 4 and pushed into the connecting channel 9. Thereafter the flow guiding means 15 are mounted. To this end the flow guiding means 15 are mounted on the pressure regulating means 10 and then shifted onto the flow tube 8 or vice versa. It is of advantage when the material of the flow guiding means 15 is elastically deformable, so that mounting can easily be done. The deformation is not very important. The material of the flow guiding means is in any case stable enough to withstand the pressure in the flow channel 7.

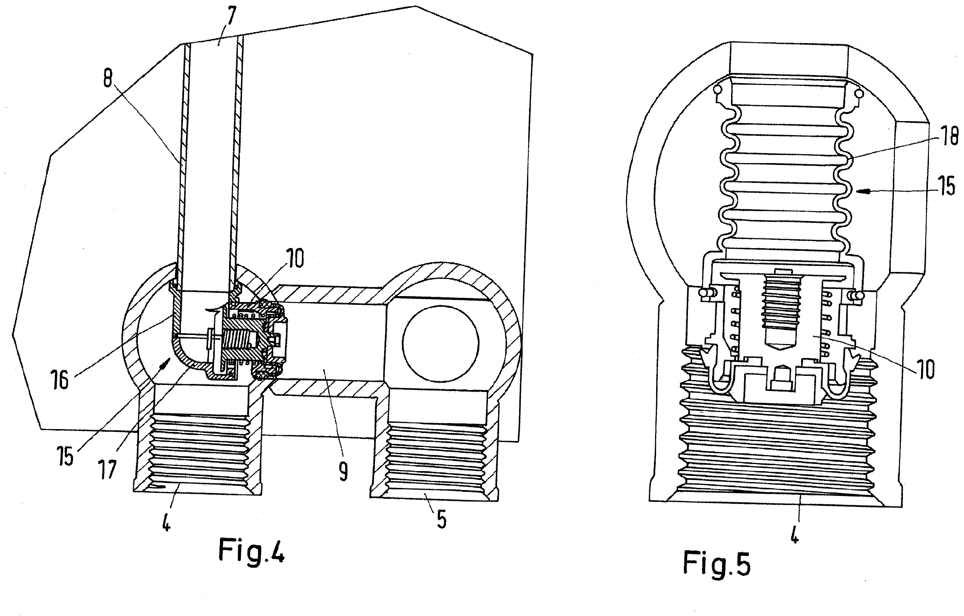

Fig. 4 shows a second embodiment in which the same elements are denoted by the same reference numerals.

In this embodiment the flow guiding means 15 comprises two pieces, i.e. a first piece 16 which is connected to the flow tube 8 and a second piece 17 which is connected to the first piece 16 by means of a snap connection.

Mounting of the flow regulating means 10 is further simplified with such an embodiment.

In a first step the first piece 16 is inserted through the flow connection 4 and shifted onto the opening of the flow tube 8. Thereafter the pressure regulating means 10 are inserted through the flow connection 4 and pushed into the connecting channel 9. During this mounting step the upper part of the pressure regulating means 10 is accommodated in a corresponding half of an opening which half is provided in the first piece 16. Thereafter the second piece 17 is inserted through the flow connection 4 and connected to the first piece 16 by the above mentioned snap connection. The second piece 17 forms the lower half of the opening in which the pressure regulating means 10 are mounted in the flow guiding means 15.

Fig. 5 shows parts of a third embodiment without the connection channel 9 and without the flow tube 8.

In this embodiment the flow guiding means 15 are in form of a corrugated tube 18. The corrugated tube 18 is inserted through the flow connection 4 and mounted to the flow tube 8 (not shown). The pressure control means 10 can be mounted to the corrugated tube 18 before or after inserting the corrugated tube 18 through the flow connection 4.

The pressure regulating means 10 are moved further through the flow connection 4 thereby decreasing the length of the corrugated tube 18. When the pressure regulating means 10 have been moved far enough, the corrugated tube 18 is bent by approximately 90° to insert the pressure regulating means 10 into the connecting channel 9 .

## Claims

1. Radiator arrangement (1) comprising a radiator (2-4) having a flow channel (7) and a flow connection (4) connected to the flow channel (7) and a return connection (5), wherein the radiator arrangement (1) further comprises a connecting channel (9) which is arranged between the flow connection (4) and the return connection (5), and pressure regulating means (10) configured for controlling a flow pressure in the flow channel (7) on basis of a return pressure in the connecting channel (9), wherein the pressure regulating means (10) are arranged in the connecting channel (9), so that they are built in and hidden in the radiator (2-4), the pressure regulating means (10) forming a seal between the connecting channel (9) and the flow connection (4), and the pressure regulating means (10) comprise a pressure responsive element (11) loaded by the return pressure in the connecting channel (9).

2. Radiator arrangement according to claim 1, **characterized in that** the pressure regulating means (10) are arranged for being mounted through the flow connection (4).

3. Radiator arrangement according to claim 1 or 2, **characterized in that** the connecting channel (9) is located in a bottom part of the radiator (1).

4. Radiator arrangement according to any of claims 1 to 3, **characterized in that** the pressure regulating means (10) are at least partly accommodated in flow guiding means (15), wherein the flow guiding means (15) connect the flow connection (4) to the flow channel (7).

5. Radiator arrangement according to claim 4, **characterized in that** the flow channel (7) is formed by a flow tube (8) and the flow guiding means (15) are seated on an opening of the flow tube (8).

6. Radiator arrangement according to claim 4 or 5, **characterized in that** the guiding means (15) are made of a flexible material.

7. Radiator arrangement according to claim 4 to 6, **characterized in that** the guiding means (15) comprise at least two pieces (16, 17).

8. Radiator arrangement according to claim 7, **characterized in that** the two pieces (16, 17) are connected by a snap connection.

9. Radiator arrangement according to claim 7 or 8, **characterized in that** an opening or the flow guiding means (15) in which the pressure regulating means (10) are mounted is formed by the two pieces (16, 17).

10. Radiator arrangement according to claim 4 to 6, **characterized in that** the flow guiding means (15) are in form of a corrugated tube (18).

## Patentansprüche

1. Heizkörperanordnung mit einem Heizkörper (2-4), der einen Vorlaufkanal (7) und einen mit dem Vorlaufkanal (7) verbundenen Vorlaufanschluss (4) und einen Rücklaufanschluss (5) aufweist, wobei die Heizkörperanordnung (1) weiterhin einen Verbindungskanal (9), der zwischen dem Vorlaufanschluss (4) und dem Rücklaufanschluss (5) angeordnet ist, und Drucksteuermittel (10) aufweist, die zur Steuerung eines Vorlaufdrucks im Vorlaufkanal (7) auf der Grundlage eines Rücklaufdrucks im Verbindungskanal (9) ausgebildet sind, wobei die Drucksteuerungsmittel (10) in dem Verbindungskanal (9) angeordnet sind, sodass sie in den Heizkörper (2-4) eingebaut und darin verborgen sind, wobei die Drucksteuerungsmittel (10) eine Dichtung zwischen dem Verbindungskanal (9) und dem Vorlaufanschluss (4) bilden und die Drucksteuerungsmittel (10) ein druckempfindliches Element (11) aufweisen, das durch den Rücklaufdruck in den Verbindungskanal (9) belastet ist.

2. Heizkörperanordnung nach Anspruch 1, **dadurch gekennzeichnet, dass** die Drucksteuerungsmittel (10) so angeordnet sind, dass sie durch den Vorlaufanschluss (4) montiert werden können.

3. Heizkörperanordnung nach Anspruch 1 oder 2, **dadurch gekennzeichnet, dass** der Verbindungskanal in einem unteren Teil des Heizkörpers (1) angeordnet ist.

4. Heizkörperanordnung nach einem der Ansprüche 1 bis 3, **dadurch gekennzeichnet, dass** die Drucksteuerungsmittel (10) zumindest teilweise in Strömungsführungsmitteln (15) aufgenommen sind, wobei die Strömungsführungsmittel (15) den Vorlaufanschluss (4) mit dem Vorlaufkanal (7) verbinden.

5. Heizkörperanordnung nach Anspruch 4, **dadurch gekennzeichnet, dass** der Vorlaufkanal (7) durch ein Strömungsrohr (8) gebildet ist und die Strömungsführungsmittel (15) auf einer Öffnung des Strömungsrohrs (8) sitzen.

6. Heizkörperanordnung nach Anspruch 4 oder 5, **dadurch gekennzeichnet, dass** die Strömungsführungsmittel (15) aus einem flexiblen Material gebildet sind.

7. Heizkörperanordnung nach einem der Ansprüche 4 bis 6, **dadurch gekennzeichnet, dass** die Strömungsführungsmittel (15) mindestens zwei Teile aufweisen.

8. Heizkörperanordnung nach Anspruch 7, **dadurch gekennzeichnet, dass** die beiden Teile (16, 17) durch eine Schnappverbindung verbunden sind.

9. Heizkörperanordnung nach Anspruch 7 oder 8, **dadurch gekennzeichnet, dass** eine Öffnung oder die Strömungsführungsmittel (15), in der die Drucksteuermittel (10) montiert sind, durch die beiden Teile (16, 17) gebildet sind.

10. Heizkörperanordnung nach einem der Ansprüche 4 bis 6, **dadurch gekennzeichnet, dass** die Strömungsführungsmittel (15) in Form eines Wellrohrs (18) ausgebildet sind.

## Revendications

1. Agencement de radiateur (1) comprenant un radiateur (2-4) ayant un canal d'écoulement (7) et une connexion d'écoulement (4) connectée au canal d'écoulement (7) et une connexion de retour (5), dans lequel l'agencement de radiateur (1) comprend en outre un canal de connexion (9) qui est agencé entre la connexion d'écoulement (4) et la connexion de retour (5), et un moyen de régulation de la pression (10) configuré pour commander une pression d'écoulement dans le canal d'écoulement (7) en se basant sur une pression de retour dans le canal de connexion (9), dans lequel le moyen de régulation de pression (10) est agencé dans le canal de connexion (9) de façon à ce qu'il soit construit et caché dans le radiateur (2-4), le moyen de régulation de pression (10) formant un joint entre le canal de connexion (9) et la connexion d'écoulement (4) et le moyen de régulation de pression (10) comprend un élément de réponse à la pression (11) chargé par la pression de retour dans le canal de connexion (9).

2. Agencement de radiateur selon la revendication 1, **caractérisé en ce que** le moyen de régulation de pression (10) est agencé pour être monté à travers la connexion d'écoulement (4).

3. Agencement de radiateur selon la revendication 1 ou 2, **caractérisé en ce que** le canal de connexion (9) est situé dans une partie inférieure du radiateur (1).

4. Agencement de radiateur selon l'une quelconque des revendications 1 à 3, **caractérisé en ce que** le moyen de régulation de pression (10) est au moins partiellement logé dans un moyen de guidage d'écoulement (15), dans lequel le moyen de guidage d'écoulement (15) connecte la connexion d'écoulement (4) au canal d'écoulement (7) .

5. Agencement de radiateur selon la revendication 4, **caractérisé en ce que** le canal d'écoulement (7) est formé par un tube d'écoulement (8) et le moyen de guidage d'écoulement (15) est logé sur une ouverture du tube d'écoulement (8).

6. Agencement de radiateur selon la revendication 4 ou 5, **caractérisé en ce que** le moyen de guidage (15) est fait d'un matériau flexible.

7. Agencement de radiateur selon l'une quelconque des revendications 4 à 6, **caractérisé en ce que** le moyen de guidage (15) comprend au moins deux pièces (16, 17).

8. Agencement de radiateur selon la revendication 7, **caractérisé en ce que** les deux pièces (16, 17) sont reliées par une connexion par pression.

9. Agencement de radiateur selon la revendication 7 ou 8, **caractérisé en ce qu'**une ouverture ou le moyen de guidage d'écoulement (15) dans lequel le moyen de régulation de la pression (10) est monté est formée par les deux pièces (16, 17).

10. Agencement de radiateur selon l'une quelconque des revendications 4 à 6, **caractérisé en ce que** le moyen de guidage d'écoulement (15) a la forme d'un tube ondulé (18) .
